# EUROPÄISCHE PATENTSCHRIFT

(11) **EP 1 029 086 B1**
(45) Veröffentlichungstag und Bekanntmachung des Hinweises auf die Patenterteilung: **03.07.2002**
(21) Anmeldenummer: 98959812.3
(22) Anmeldetag: 29.10.1998
(51) Int. Cl.: C21B 13/00

(54) **VERFAHREN ZUM ERZEUGEN EINES GEMISCHES AUS EISENCARBID UND KÖRNIGEM, DIREKT REDUZIERTEM EISEN**
METHOD FOR PRODUCING A MIXTURE OF IRON CARBIDE AND GRANULAR, DIRECTLY REDUCED IRON
PROCEDE POUR PRODUIRE UN MELANGE CONSTITUE DE CARBURE DE FER ET DE FER DE REDUCTION DIRECTE GRANULE

(30) Priorität: 06.11.1997 DE 19748968
(43) Veröffentlichungstag der Anmeldung: 23.08.2000
(73) Patentinhaber: Outokumpu Oyj, 02200 Espoo (FI)
(72) Erfinder: HIRSCH, Martin, D-61381 Friedrichsdorf (DE); SAATCI, Alpaydin, D-60386 Frankfurt am Main (DE)
(74) Vertreter: KEIL & SCHAAFHAUSEN
(86) Internationale Anmeldenummer: EP9806869
(87) Internationale Veröffentlichungsnummer: WO9924625

(56) Entgegenhaltungen:
- WO-A-93/15232
- DE-A- 1 433 319
- DE-C- 19 538 591
- FR-A- 1 572 081
- FR-A- 2 134 467
- FR-A- 2 360 670
- GB-A- 1 310 050
- US-A- 3 619 262

## Beschreibung

Die Erfindung betrifft ein Verfahren zum Erzeugen eines 5-90 Gew.-% Eisencarbid in Form von Fe₃C enthaltenden eisenhaltigen Produkts aus körnigem, durch Direktreduktion von Eisenerz hergestelltem Eisen, DRI, in einem Karburierreaktor unter Zufuhr von Kohlenwasserstoff. Direkt reduziertes Eisen wird in der Fachwelt auch als DRI (direct reduced iron) oder auch als Eisenschwamm bezeichnet.

Aus den US-Patenten 5 527 379 und 5 603 748 ist die Direktreduktion von Eisenoxid bekannt, wobei man körniges, eisenoxidhaltiges Material in mehreren Wirbelbetten mit heißem Reduktionsgas bei Temperaturen von 500 bis 900°C in direkten Kontakt bringt. Wenn das Reduktionsgas neben Wasserstoff noch einen erheblichen Gehalt an Kohlenmonoxid aufweist, kann man aus der letzten Wirbelbett-Stufe des bekannten Reduktionsverfahrens ein Produkt abziehen, welches reich an Fe₃C ist. In der Praxis hat sich aber gezeigt, daß beim Reduzieren von Eisenoxid zu Eisen durch den entstehenden Wasserdampf die gleichzeitige Bildung von Eisencarbid durch Reaktion von Eisen mit CO und/oder CH₄ stark behindert wird.

In der DE-C-195 38 591 wird die Aufkohlung von DRI in einem bewegten Behälter beschrieben, wobei man das DRI mit Temperaturen von 750 bis 1100°C zuführt und unter anderem flüssige Kohlenwasserstoffe einleitet. Hierbei geht es nicht darum, einen hohen Gehalt an Fe₃C im Produkt zu erreichen, man arbeitet vielmehr bei relativ hohen Temperaturen, bei welchen die flüssigen Kohlenwasserstoffe im Kontakt mit dem heißen DRI vor allem zur Rußbildung führen. Der gebildete Ruß reagiert nicht oder kaum weiter zu Fe₃C und wird mit dem karburierten Produkt abgezogen.

In der GB-A-1 310 050 wird die Erzeugung von karburiertem Eisen bei Temperaturen von mindestens 800 °C beschrieben, mit dem Ziel, freien Kohlenstoff zu bilden.

In der WO-A93/15232 wird das Karburieren von körnigem Bettmaterial aus reduziertem Eisenerz und Koks beschrieben. Die Karburierung erfolgt bei Temperaturen von 800 bis 850 °C, wobei Restkoks aus der Reduktion verwendet wird.

Der Erfindung liegt die Aufgabe zugrunde, die Karburierung des heißen, direkt reduzierten Eisens außerhalb der Reduktionsanlage in einem Karburierreaktor so durchzuführen, daß die Rußbildung ganz oder weitgehend unterdrückt wird. Ferner soll es möglich sein, ein Produkt mit einem variablen Anteil an Fe₃C zu erzeugen. Erfindungsgemäß geschieht dies beim eingangs genannten Verfahren dadurch, daß man das DRI in einem unter Zufuhr von Fluidisierungsgas gebildeten Wirbelbett eines Karburierreaktors bei einer Temperatur im Bereich von 500 bis 900°C durch Zufuhr flüssiger Kohlenwasserstoffe karburiert. Vorzugsweise besteht das Produkt zu mindestens 10 Gew.-% aus Fe₃C. Der Karburierreaktor kann kontinuierlich oder chargenweise betrieben werden.

Die in den Karburierreaktor eingeleiteten flüssigen Kohlenwasserstoffe können von unterschiedlicher Art sein. Zweckmäßigerweise kommen verschiedene Heizölsorten infrage, angefangen vom extra leichten Heizöl bis zum schweren Heizöl. Pro kg dem Karburierreaktor zugeführten DRI leitet man üblicherweise 0,005 bis 0,2 kg flüssige Kohlenwasserstoffe in den unteren Bereich des Reaktors. Durch die in den Karburierreaktor eingeleiteten flüssigen Kohlenwasserstoffe ergibt sich im heißen Feststoffbett eine intensive Gasbildung, die das Bett mindestens teilweise aufwirbelt. Zwecks Karburierung im Wirbelbett wird zusätzlich zu den flüssigen Kohlenwasserstoffen auch noch ein Fluidisierungsgas in den unteren Bereich des Bettes geleitet. Dabei wird man dafür sorgen, daß der Wassergehalt des Fluidisierungsgases höchstens 1,5 Vol.-% beträgt. Vorzugsweise arbeitet man mit einem methanhaltigen Fluidisierungsgas, das auch noch einen Wasserstoffanteil enthalten kann. Ein geeignetes Fluidisierungsgas ist z.B. das Abgas des Karburierreaktors, das man zuvor entwässert hat.

Im Karburierreaktor bildet sich aus den flüssigen Kohlenwasserstoffen neben Fe₃C ein Methan und Wasserstoff enthaltendes Gasgemisch, welches man als Abgas abzieht. Wenn man das Abgas kühlt, wird ein wasserhaltiges Kondensat gebildet, das man abtrennt. Mindestens einen Teil des gekühlten Abgases kann man wieder erhitzen und als Fluidisierungsgas in den Reaktor leiten. Dieses Fluidisierungsgas besteht zu etwa 40 bis 95 Vol.-% aus Wasserstoff, und der Methan-Gehalt liegt im Bereich von 5 bis 50 Vol.-%. Diese Prozent-Angaben sind wasserfrei und ohne Berücksichtigung eines üblicherweise vorhandenen Stickstoff-Anteils gerechnet. Das Fluidisierungsgas kann ferner noch Kohlenoxide enthalten.

Das in die Wirbelschicht des Reaktors eingeleitete Fluidisierungsgas, üblicherweise rückgeführtes Abgas, ist an der Carbidbildung im Reaktor nicht oder nicht nennenswert beteiligt. Vorzugsweise entsteht Eisencarbid im Reaktor vor allem durch den freien Kohlenstoff, der sich beim Cracken der flüssigen Kohlenwasserstoffe kurzzeitig bildet. Dieser Kohlenstoff ist sehr reaktiv und reagiert bei den vorhandenen Temperaturen intensiv mit metallischem Eisen zu Eisencarbid. Aus der Wirbelschicht kann deshalb ein karburiertes Produkt abgezogen werden, das zu mindestens 30 Gew.-% aus Fe₃C besteht.

Wenn der Kohlenstoffgehalt des Produkts angegeben ist, so ist hier stets der gesamte C-Gehalt gemeint, der sowohl gebunden (Fe₃C) als auch frei in Form von Ruß vorliegen kann. Zumeist beträgt der C-Gehalt im Endprodukt höchstens 3 Gew.-%. Es ist aber ohne Schwierigkeiten möglich, ein Endprodukt mit einem höheren C-Gehalt zu erzeugen. Beim C-Gehalt von 3 Gew.-% weist das Endprodukt etwa 50 Gew.-% Fe₃C und daneben eventuell noch eine geringe Menge an freiem Kohlenstoff auf.

Bei zu hohen Temperaturen nimmt die Bildung von Fe₃C stark ab. Wenn man die Temperaturen im Wirbelbett bei etwa 640 bis 700°C hält, erzeugt man ein Endprodukt mit einem relativ niedrigen Fe₃C-Gehalt, wobei der Kohlenstoff-Gehalt in der Nähe von 1 Gew.-% liegt. Es hat sich gezeigt, daß ein solches Produkt für die anschließende Heißbriquettierung in der Walzenpresse unter inerter Atmosphäre gut geeignet ist. Will man im Endprodukt einen höheren Fe₃C-Gehalt erzeugen, der einem Kohlenstoff-Gehalt von über 2 Gew.-% entspricht, so sorgt man im Wirbelbett für relativ niedrige Temperaturen im Bereich von 580 bis 640°C.

Es kann vorteilhaft sein, wenn sich das Feststoffbett in einem konischen Karburierreaktor befindet, der sich nach unten verjüngt. Bei dieser Reaktorform wird das Feststoffbett durch die Gasbildung intensiv aufgewirbelt, so daß ein Wirbelbett entsteht. Dieses Wirbelbett begünstigt den Stoffaustausch und damit die Carbidbildung. Üblicherweise hat das Wirbelbett im konischen Karburierreaktor eine Höhe von 1 bis 4 m. Es kann zusätzlich zweckmäßig sein, im Reaktor einen erhöhten Druck bis etwa 10 bar aufrechtzuerhalten, um die Reaktionsgeschwindigkeit zu erhöhen.

Vorteilhafterweise kommt das körnige, direkt reduzierte Eisen (DRI) aus einer Reduktionsanlage, in welcher es in der letzten Reduktionsstufe in einem Wirbelbett behandelt wird. Diesem Wirbelbett führt man als Fluidisierungs- und Reduktionsgas ein Gas mit einem H₂-Gehalt von mindestens 90 Vol.-% und mit einer Temperatur von 600 bis 1000°C zu. Einzelheiten einer solchen Reduktionsanlage sind in den US-Patenten 5 527 379 und 5 603 748 beschrieben. Hierbei erhitzt man das Eisenerz zunächst auf Temperaturen von 500 bis 900°C und gibt es dann der ersten Reduktionsstufe auf. Diese erste Reduktionsstufe ist als zirkulierende Wirbelschicht ausgebildet, welcher man ein Fluidisierungsgas mit einem H₂-Gehalt von mindestens 75 Vol.-% zuführt. Die Temperaturen in der ersten Reduktionsstufe liegen im Bereich von 600 bis 800°C. Teilweise reduziertes Erz mit einem Metallisierungsgrad von üblicherweise 50 bis 80 % wird dann der zweiten (und gleichzeitig letzten) Reduktionsstufe zugeführt. In dieser letzten Reduktionsstufe wird in einem stationären Wirbelbett gearbeitet, das zweckmäßigerweise mehrere nebeneinander liegende Abteile aufweist, die durch Überlauf-Wehre voneinander getrennt sind. Auch dies ist in den zuvor genannten US-Patenten beschrieben. Das so erzeugte DRI weist einen Metallisierungsgrad von über 85 % und üblicherweise mindestens 90 % auf.

Ausgestaltungsmöglichkeiten des Verfahrens werden mit Hilfe der Zeichnung erläutert; es zeigt:
Fig. 1 ein Fließschema einer ersten Verfahrensvariante und
Fig. 2 eine zweite Verfahrensvariante.

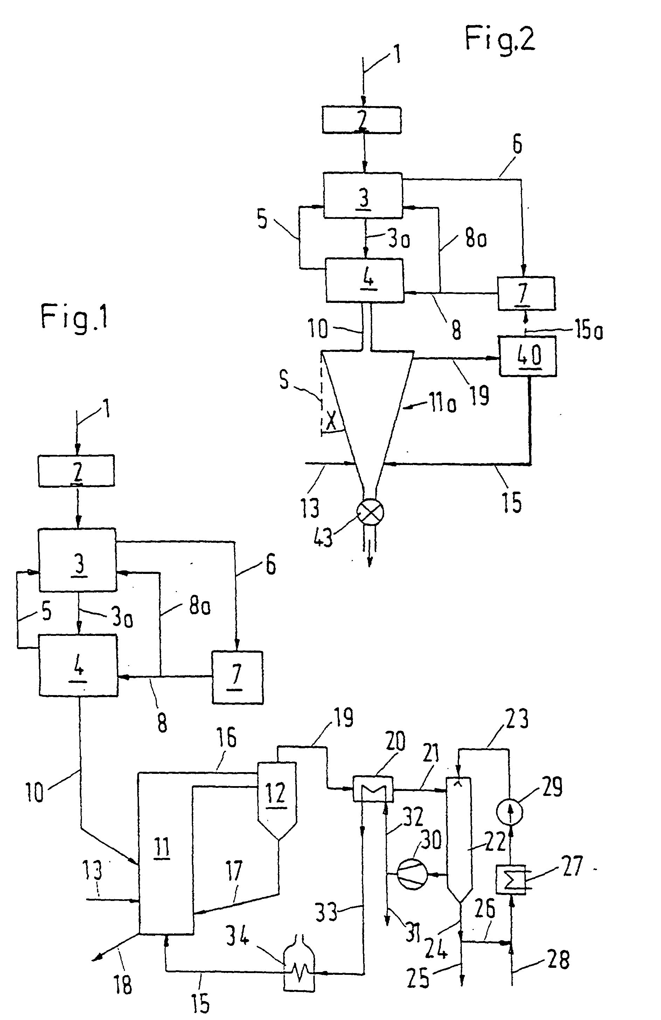

Aus körnigem Eisenoxid, das in der Leitung (1) herangeführt wird, vergleiche Fig. 1, erzeugt man durch Reduktion zunächst DRI. Die Reduktion kann in beliebiger, an sich bekannter Weise erfolgen. Eine vorteilhafte Arbeitsweise ist in den bereits erwähnten US-Patenten 5 527 379 und 5 603 748 beschrieben. Hierbei folgt auf eine Trocknungs- und Erhitzungsstufe (2) eine erste Reduktionsstufe (3) und eine daran anschließende zweite Reduktionsstufe (4). In beiden Reduktionsstufen wird die Reduktion im Wirbelbett durchgeführt, wobei man als Reduktionsund Fluidisierungsgas heißes, wasserstoffhaltiges Gas verwendet.

Die Temperaturen in beiden Stufen (3) und (4) liegen im Bereich von 500 bis 900°C. Die erste Stufe (3) ist als zirkulierende Wirbelschicht ausgestaltet, wobei man hier zumindest teilweise durch die Leitung (5) gebrauchtes, H₂-haltiges Reduktionsgas aus der zweiten Stufe (4) zuführt.

Das Abgas der ersten Stufe führt man in der Leitung (6) zurück zu einer Aufbereitungsanlage (7), in welcher man auch frisches wasserstoffreiches Gas erzeugt. Das Gas wird als heißes Reduktionsgas durch die Leitung (8) in die zweite Reduktionsstufe (4) geführt, in welcher die Feststoffe ein stationäres Wirbelbett bilden. Üblicherweise besteht das Gas der Leitung (8) zu mindestens 90 Vol.-% aus Wasserstoff. Ein Teilstrom des Reduktionsgases aus der Leitung (8) wird durch die Leitung (8a) zweckmäßigerweise direkt in die erste Stufe (3) geführt. Der Metallisierungsgrad im teilreduzierten Erz der Leitung (3a) liegt bei 50 bis 80 %.

Aus der zweiten Reduktionsstufe (4) zieht man körniges DRI ab, das praktisch frei von Kohlenstoff ist. Diesem direkt reduzierten Eisen, das Temperaturen im Bereich von 650 bis 900°C aufweist, führt man durch den Kanal (10) zur Karburierung, wobei man es einem Wirbelschichtreaktor (11) aufgibt, der mit einem Abscheidezyklon (12) verbunden ist. Zum Karburieren führt man durch die Leitung (13) flüssige Kohlenwasserstoffe heran, z.B. Heizöl. Im Reaktor liegen die Temperaturen im Bereich von 500 bis 900°C. Heißes Fluidisierungsgas, das Wasserstoff und Methan enthält, wird in der Leitung (15) herangeführt. Eine Gas-Feststoff-Suspension strömt vom oberen Bereich des Reaktors (11) durch den Kanal (16) in den Abscheider (12), und abgeschiedene Feststoffe gelangen durch die Leitung (17) zurück in den Reaktor (11). Das aus dem unteren Bereich des Reaktors (11) durch den Kanal (18) abgezogene karburierte Endprodukt besteht aus metallischem Eisen und Fe₃C, wobei der Fe₃C-Gehalt üblicherweise mindestens 30 Gew.-% und der C-Gehalt des Endprodukts mindestens 2 Gew.-% beträgt.

Durch Crackprozesse entsteht im Reaktor (11) ein Gasgemisch, welches den Abscheider (12) durch die Leitung (19) als Abgas verläßt. Um gekühlt zu werden, strömt dieses Abgas zunächst durch den Wärmeaustauscher (20) und wird dann in der Leitung (21) in einen Waschkühler (22) geführt. In diesen Waschkühler wird wasserreiches Kondensat eingesprüht, welches aus der Leitung (23) kommt. Staubhaltiges Kondensat zieht man in der Leitung (24) ab, entfernt durch die Leitung (25) einen Teil der feststoffhaltigen Flüssigkeit aus dem Prozeß und leitet das restliche Kondensat in der Leitung (26) zu einem Kühler (27). Frisches Wasser wird in der Leitung (28) herangeführt. im Kühler wird die wasserreiche Flüssigkeit auf Temperaturen von etwa 30 bis 70°C gekühlt und dann mit Hilfe der Kreislaufpumpe (29) zurück in den Waschkühler (22) geführt.

Gekühltes und entstaubtes Abgas wird vom Gebläse (30) angesaugt, einen Teilstrom entfernt man durch die Leitung (31) aus dem Verfahren, und das restliche Abgas gelangt durch die Leitung (32) zum Erwärmen in den Wärmeaustauscher (20) und strömt dann in der Leitung (33) zu einem gefeuerten Erhitzer (34), bevor das Abgas mit Temperaturen von 300 bis 700°C durch die Leitung (15) in den Karburierreaktor (11) zurückgeführt wird.

Gemäß Fig. 2 gibt man das heiße DRI durch den Kanal (10) dem Karburierreaktor (11a) auf. Der Reaktor (11a) hat eine konische Form, wobei der Konuswinkel X, gemessen gegen die Senkrechte S, üblicherweise im Bereich von 10 bis 30° liegt. Flüssige Kohlenwasserstoffe werden durch die Leitung (13) zugespeist, wobei sie in dem heißen Feststoffbett, das sich im Reaktor (11a) befindet, verdampfen. Mindestens ein Teil der Kohlenwasserstoff-Moleküle setzt sich mit metallischem Eisen zu Fe₃C um. Aus diesen und anderen Reaktionen entsteht eine intensive Gasbildung. Die Gase, die Wasserstoff und Methan enthalten, wirbeln die Feststoffe auf und führen zur Ausbildung eines Wirbelbettes. Die konische Form des Reaktors (11a) begünstigt hierbei die Entstehung des erwünschten Wirbelbettes.

Durch ein Dosierorgan (43), z.B. einen Kugelhahn, zieht man das karburierte Endprodukt ab, dessen Fe₃C-Gehalt üblicherweise 5 bis 50 Gew.-% und vorzugsweise mindestens 10 Gew.-% beträgt. Das in der Leitung (19) abgezogene Abgas enthält erhebliche Mengen an Wasserstoff und Methan. Es kann sich deshalb empfehlen, dieses Abgas ganz oder teilweise in die Anlage (7) zu führen, wie das durch die gestrichelte Leitung (15a) angedeutet ist. Der andere Teil des Abgases oder das Abgas zur Gänze wird nach einer Behandlung in einer Aufbereitung (40), etwa wie in Fig. 1 beschrieben, als Fluidisierungsgas durch die Leitung (15) in den Reaktor (11a) zurückgeführt. Die übrigen Bezugsziffern haben die bereits zu Fig. 1 erläuterte Bedeutung.

### Beispiel 1:

In einer der Fig. 1 der Zeichnung entsprechenden Verfahrensführung geht es um die Produktion von 600 000 t Fe₃C/Jahr aus einem Eisenerz mit einem Fe-Gehalt von 67 Gew.-%, der zu 96 Gew.-% aus Fe₂O₃ besteht. Neben anderer Gangart enthält das Erz 2,4 Gew.-% SiO₂. Die folgenden Daten sind teilweise berechnet, wobei man von einer Reduktionsanlage ausgeht, wie sie im US-Patent 5 603 748 beschrieben ist.

Auf 850°C erhitzt, gelangt das Erz mit einer Körnung im Bereich von 0,1 bis 1 mm in die erste Reduktionsstufe (3), die als zirkulierende Wirbelschicht ausgestaltet ist und in welcher die Temperatur bei 630°C liegt. Das der Stufe (3) zugeführte heiße reduzierende Fluidisierungsgas besteht zu 85 Vol.-% aus Wasserstoff; pro kg Eisenerz führt man der ersten Stufe (3) 3 Nm³H₂ zu. Teilreduziertes Erz mit einem Metallisierungsgrad von 75 % gelangt durch die Leitung (3a) in die zweite Reduktionsstufe (4), in welcher man im stationären Wirbelbett bei Temperaturen von 680°C arbeitet. Pro kg Feststoffe werden der Stufe (4) 2 Nm³ heißer Wasserstoff als Fluidisierungsgas zugeführt, das Gas der Leitung (8) besteht zu 90 Vol.-% aus H₂ und enthält noch 9 Vol.-% N₂ und 1 Vol.-% H₂O.

63,6 t/h DRI mit einer Temperatur von 680°C und vernachlässigbar kleinem C-Gehalt werden zur Carbidbildung in den Reaktor (11) geleitet, wo die Temperatur auf 600°C gehalten wird und der Druck 1,3 bar beträgt. Das DRI besteht zu 88 Gew.-% aus metallischem Fe, zu 8,5 Gew.-% aus FeO und zu 3,5 Gew.-% aus SiO₂.

Dem Reaktor (11) gibt man zum Karburieren 2,9 t/h leichtes Heizöl auf, und man führt durch die Leitung (15) 25000 Nm³/h rückgeführtes Abgas mit einem H₂-Gehalt von 88,5 Vol.-%, einem CH₄-Gehalt von 8,5 Vol.-%, einem N₂-Gehalt von 1,5 Vol.-% und einem H₂O-Gehalt von 1,5 Vol.-% zu. In diesen verschiedenen Leitungen strömen folgende Gasmengen:

| Leitung | 19 | 32 | 31 | 15 |
|---|---|---|---|---|
| Gasmenge (Nm³/h) | 29.400 | 25.000 | 4.400 | 25.000 |
| Temperatur (°C) | 600 | 30 | 30 | 850 |

Das in der Leitung (18) abgezogene karburierte DRI hat einen Fe₃C-Gehalt von 40 Gew.-% und besteht ferner zu 8 Gew.-% aus FeO, zu 3 Gew.-% aus SiO₂ und zu 48 Gew.-% aus metallischem Eisen. Der Kohlenstoffgehalt des karburierten DRI beträgt 2,9 Gew.-%, davon sind 90 % als Fe₃C gebunden.

### Beispiel 2:

Aus dem in Beispiel 1 verwendeten DRI wird nunmehr ein höher karburiertes Endprodukt mit einem Fe₃C-Gehalt von 89 Gew.-% erzeugt. Zu diesem Zweck gibt man dem Reaktor (11) zum Karburieren 5,9 t/h leichtes Heizöl auf, und man führt durch die Leitung (15) 52900 Nm³/h rückgeführtes Abgas mit einem H₂-Gehalt von 63 Vol.-%, einem CH₄-Gehalt von 34 Vol.-%, einem N₂-Gehalt von 2,5 Vol.-% und einem H₂O-Gehalt von 0,5 Vol.-% zu. In diesen verschiedenen Leitungen strömen folgende Gasmengen:

| Leitung | 19 | 32 | 31 | 15 |
|---|---|---|---|---|
| Gasmenge/ (Nm³/h) | 60.700 | 52.900 | 7.800 | 52.900 |
| Temperatur (°C) | 600 | 35 | 35 | 800 |

Der in der Leitung (18) abgezogene karburierte Eisenschwamm hat einen Fe₃C-Gehalt von 89 Gew.-% und besteht zu 8 Gew.-% aus FeO und zu 3 Gew.-% aus SiO₂.

### Beispiel 3:

Man arbeitet gemäß Fig. 2 und verwendet ein wie im Beispiel 1 erzeugtes DRI, das nunmehr jedoch eine Temperatur von 750°C aufweist. 63,6 t/h DRI werden in den Karburierreaktor (11a) geleitet, der eine Höhe von 4,5 m aufweist, konisch ausgebildet ist und ohne Zufuhr von Fluidisierungsgas arbeitet. Im Reaktor (11a) befindet sich ein Wirbelbett mit einer Höhe von 3 m, gemessen ab Einmündung der Leitung (13). Der Druck im Reaktor beträgt 2 bar, die Temperatur im Wirbelbett wird auf 680°C gehalten. Durch die Leitung (13) führt man 0,7 t/h leichtes Heizöl zu, das auf 400°C vorgewärmt wurde. Aus dem Reaktor (11a) zieht man ein karburiertes Endprodukt ab, dessen Fe₃C-Gehalt 12 Gew.-% beträgt und das neben metallischem Eisen noch 9 Gew.-% FeO und 3 Gew.-% SiO₂ aufweist. Der C-Gehalt dieses Produkts beträgt 0,8 Gew.-%. Das Abgas der Leitung (19) enthält 870 Nm³/h H₂ und 130 Nm³/h CH₄.

### Beispiel 4:

Es wird ähnlich wie im Beispiel 3 gearbeitet, doch führt man dem Karburierreaktor (11a) jetzt 228 t/h DRI mit 750°C, einem gesamten Fe-Gehalt von 95 Gew.-%, einem FeO-Gehalt von 8,5 Gew.-% und einem SiO₂-Gehalt von 3 Gew.-% zu. Das DRI ist praktisch C-frei. Zum Karbuieren verwendet man 5,7 t/h extra leichtes Heizöl, das auf 400°C vorgewärmt wurde. Man zieht 232,1 t/h karburiertes Endprodukt ab mit einer Temperatur von 600°C und-einem C-Gehalt von 1,8 Gew.-%, bezogen auf den gesamten Fe-Gehalt des Produkts. Das Endprodukt enthält 26,5 Gew.-% Fe₃C, 8,4 Gew.-% FeO und 2,9 Gew.-% SiO₂. Das Abgas der Leitung (19) enthält 7000 Nm³/h H₂ und 1300 Nm³/h CH₄.

## Patentansprüche

1. Verfahren zum Erzeugen eines 5-90 Gew.-% Eisencarbid in Form von Fe₃C enthaltenden eisenhaltigen Produkts aus körnigem, durch Direktreduktion von Eisenerz hergestelltem Eisen, DRI, wobei das DRI in einem unter Zufuhr von Fluidisierungsgas gebildeten Wirbelbett eines Karburierreaktors (11;11a) bei einer Temperatur von 500 bis 900°C durch Zufuhr von flüssigen Kohlenwasserstoffen karburiert wird.

2. Verfahren nach Anspruch 1, **dadurch gekennzeichnet, daß** das aus dem Karburierreaktor abgezogene Produkt höchstens 3 Gew.-% Kohlenstoff enthält.

3. Verfahren nach Anspruch 1 oder 2, **dadurch gekennzeichnet, daß** dem Karburierreaktor pro kg zugeführtem DRI 0,005 bis 0,2 kg flüssige Kohlenwasserstoffe zugeführt werden.

4. Verfahren nach Anspruch 1, 2 oder 3, **dadurch gekennzeichnet, daß** man aus dem Karburierreaktor ein Methan und Wasserstoff enthaltendes Abgas abzieht, welches man kühlt und aus welchem man Wasser abtrennt und daß man mindestens einen Teil des gekühlten Abgases erhitzt und zurück in den Reaktor leitet.

5. Verfahren nach Anspruch 1 oder einem der folgenden, **dadurch gekennzeichnet, daß** der Karburierreaktor konisch und sich nach unten verjüngend ausgebildet ist.

6. Verfahren nach Anspruch 1 oder einem der folgenden, **dadurch gekennzeichnet, daß** das körnige DRI aus einer Reduktionsanlage kommt, in welcher es in der letzten Reduktionsstufe in einem Wirbelbett behandelt wird, welchem man als Fluidisierungs- und Reduktionsgas ein Gas mit einem H₂-Gehalt von mindestens 90 Vol.-% und mit einer Temperatur von 600 bis 1000°C zuführt.

7. Verfahren nach Anspruch 6, **dadurch gekennzeichnet, daß** man Eisenerz, das auf Temperaturen von 500 bis 900°C erhitzt ist, in der Reduktionsanlage in der ersten Reduktionsstufe in einer zirkulierenden Wirbelschicht mit Fluidisierungsgas mit einem H₂-Gehalt von mindestens 75 Vol.-% bei Temperaturen von 600 bis 800°C teilweise reduziert und daß man das in der ersten Stufe teilreduzierte Erz der letzten Reduktionsstufe aufgibt, aus welcher man das körnige DRI abzieht.

8. Verfahren nach Anspruch 1 oder einem der folgenden, **dadurch gekennzeichnet, daß** der Druck im Karburierreaktor 1 bis 10 bar beträgt.

## Claims

1. A process for producing a 5-90% by weight iron carbide in the form of an iron-containing product containing Fe₃C from granular iron produced by direct reduction of iron ore, DRI, wherein the DRI is carburised in a fluidised bed of a carburisation reactor (11; 11 a) formed with fluidising gas being supplied, at a temperature of 500 to 900°C by supplying liquid hydrocarbons.

2. A process according to Claim 1, **characterised in that** the product withdrawn from the carburisation reactor contains at most 3% by weight carbon.

3. A process according to Claim 1 or 2, **characterised in that** 0.005 to 0.2 kg liquid hydrocarbons are supplied to the carburisation reactor per kg of DRI which is supplied.

4. A process according to Claim 1, 2 or 3, **characterised in that** an exhaust gas containing methane and hydrogen is withdrawn from the carburisation reactor, which gas is cooled and from which water is separated off, and that at least part of the cooled exhaust gas is heated and passed back into the reactor.

5. A process according to Claim 1 or one of the following claims, **characterised in that** the carburisation reactor is conical and tapers downwards.

6. A process according to Claim 1 or one of the following claims, **characterised in that** the granular DRI comes from a reduction plant in which in the last reduction stage it is treated in a fluidised bed to which a gas with an H₂ content of at least 90% by volume and with a temperature of 600 to 1000°C is supplied as fluidising and reduction gas.

7. A process according to Claim 6, **characterised in that** iron ore which is heated to temperatures of 500 to 900°C is partially reduced in the reduction plant in the first reduction stage in a circulating fluidised bed with fluidising gas with an H₂ content of at least 75% by volume at temperatures of 600 to 800°C and that the ore partially reduced in the first stage is charged to the final reduction stage, from which the granular DRI is withdrawn.

8. A process according to Claim 1 or one of the following claims, **characterised in that** the pressure in the carburisation reaction is 1 to 10 bar.

## Revendications

1. Procédé de production d'un produit ferreux, contenant de 5 à 90 % en poids de carbure de fer sous la forme de Fe₃C, à partir de fer, dit DRI, granulé, préparé par réduction directe de minerai de fer, le DRI étant carburé dans un lit fluidisé, formé avec apport de gaz de fluidisation d'un réacteur (11, 11a) de carburation, à une température de 500 à 900°C par apport d'hydrocarbures liquides.

2. Procédé suivant la revendication 1, **caractérisé en ce que** le produit retiré du réacteur de carburation contient au plus 3 % en poids de carbone.

3. Procédé suivant la revendication 1 ou 2, **caractérisé en ce qu'**il est envoyé au réacteur de carburation par kg de DRI apporté, de 0,005 à 0,2 kg d'hydrocarbure liquide.

4. Procédé suivant la revendication 1, 2 ou 3, **caractérisé en ce que** l'on soutire du réacteur de carburation un effluant gazeux, contenant du méthane et de l'hydrogène, que l'on refroidit et dont on sépare de l'eau, et **en ce que** l'on chauffe au moins une partie de l'effluent gazeux refroidi et on le retourne au réacteur.

5. Procédé suivant la revendication 1 ou l'une des suivantes, **caractérisé en ce que** le réacteur de carburation est conique, en se rétrécissant vers le bas.

6. Procédé suivant la revendication 1 ou l'une des suivantes, **caractérisé en ce que** le DRI granulé, vient d'une installation de réduction, dans lequel il est traité au dernier stade de réduction dans un lit fluidisé, auquel on apporte, comme gaz de fluidisation et de réduction, un gaz ayant une teneur en H₂, d'au moins 90 % en volume et une température de 600 à 1000°C.

7. Procédé suivant la revendication 6, **caractérisé en ce que** l'on réduit partiellement du minerai de fer qui est porté à des températures de 500 à 900°C, dans l'installation de réduction dans le premier étage de réduction, dans un lit fluidisé circulant, par du gaz de fluidisation ayant une teneur en H₂ d'au moins 75 % en volume, à des températures de 600 à 800°C, et **en ce que** l'on charge dans le premier étage du minerai partiellement réduit du dernier étage de réduction, dont on retire le DRI granulé.

8. Procédé suivant la revendication 1 ou l'une des suivantes, **caractérisé en ce que** la pression dans le réacteur de carburation est comprise entre 1 et 10 bars.
